# EUROPEAN PATENT APPLICATION

(11) **EP 1 947 463 A1**
(43) Date of publication of application: **23.07.2008**
(21) Application number: 07000762.0
(22) Date of filing: 16.01.2007
(51) Int. Cl.: G01N 35/10, G01N 35/00

(54) **Collection of liquid analytical samples for clinical analytical purpose**

(71) Applicant: Roche Diagnostics GmbH, 68305 Mannheim (DE); F. Hoffmann-La Roche AG, 4070 Basel (CH)
(72) Inventor: Veen, Gerhard, 79618 Rheinfelden (DE); Gagnaux, Louis-Pierre, 8932 Mettmenstetten (CH)
(74) Representative: Troesch Scheidegger Werner AG

(57) **Abstract**

At the process for the collection of liquid samples for analytical purpose at least one first sample is collected from the surface layer, just underneath or at a distance from the surface layer of the liquid sample or analyte respectively which is removed, and afterwards a second sample is collected for being analyzed.

## Description

The present invention refers to a process for the collection of liquid samples for analytical purpose. In particular the present invention refers to the removal of application interfering compounds usually at least partially floating on the sample surface and analysis of various clinic chemical analytes primarily from lithium-heparin tubes and a device for providing liquid samples and the removal of interfering compounds for analytical purpose.

Testing of blood samples, being provided in plasma-tubes such as lithium-heparin plasma-tubes and the like suffer from the disadvantage, that duplicate errors in measurement of e.g. lactate dehydrogenase may be observed which is of course unacceptable.

The reason for the errors can be the presence of cell aggregates, the presence of silicon-based surfactants of polypropylene oxide, which are used as coatings for the interior tube-wall, silicon oils, which are used at the phlebotomy device to collect the blood from a patient, additives to prevent the formation of thrombocytes, separation gel residues, etc. Furthermore stoppers of tubes may also be coated with lubricant to facilitate their removal and to maintain the lower pressure inside the e.g. evacuated tubes. Surfactants are also a common component of many immunoassays. They are used to decrease or illuminate non-specific absorption, improve stability of the reactions or modify the solid-phase surface to render it less hydrophobic and thus minimize loss of non-convalently bound anti-body inclusion of surfactants in immunoassay regions. Especially affected from the reported drawbacks are analytes such as Na, K, LDH (lactatdehydrogenase), ALP (alkaline phosphatase), Ca and total proteins. The errors which are observed are:
1. A too low or a too high aspirated sample volume, what leads to a wrong recovery of the analyte (especially observed at absorbance tests due to the very low volume of the samples of 2 to 5µl).
2. Deposition of fibrin and/or "silicon oil" at various device parts (pipetting needle, ISE mixing towers, etc.).

As a result a modified method is proposed [1] with a predilution step to minimize duplicate errors by diluting the sample in saline and then resampling. This reduces the risk of reaspirating the same microclots that may have been aspirated in the primary sampling. However the potential for inaccuracies with the actual primary sampling as a result of microclots are not eliminated, even if the duplicate readings are within expected limits. In addition the amount of required plasma material is higher and the throughput of the system, expressed in test results per hour, goes down.

Furthermore there is the possibility of serum samples to substantially reduce duplicate errors and the differences between duplicate readings would not be considered clinically significant.

It is an object of the present invention to improve the results of measurements and to reduce the risk of duplicate errors at the analysis of liquid chemical samples such as e.g. blood plasma samples.

Proposed is a process according to the wording of claim 1.

The inventive solution consists in collecting prior to the first effective sample collection at least one first sample in advance, this first sample in advance being collected from the surface layer, just underneath or at a distance from the surface layer of the liquid sample for being disposed separately. After this first sampling in advance the effective sample collection takes place using a different sample aspirating device such as a pipetting needle.

In other words before the first regular sample pipetting a defined sample volume will be pipetted from the sample surface or just underneath or at a distance from the surface layer, the depths of the needle is at least such, that after removal of the sample the needle still is underneath or just in the surface layer. This first sample in advance being disposed afterwards and not used for analytical purpose. This so called "dummy pipetting" shall be deposited e.g. in a waste container. The depths of the needle for the removal of the first sample in advance is of course dependent upon the presence of any components or elements, which could interfere the analysis which unwanted elements and components usually are present in the upper region of the sample to be analyzed.

After this so called "dummy pipetting" the effective sample collection will take place. The volume to be removed usually is much smaller than the volume being collected in the first sample collection in advance. A typical volume being removed for analytical purpose is < 10µl, preferably 2 to 5µl.

To further optimize the dummy pipetting and to improve the cleaning of the needle of the first pipetting device it is proposed to first insert a certain volume of washing water into the pipetting needle before collecting the first sample in advance. By first feeding a certain wash water volume into the needle it is guaranteed, that the component of the first sample in advance, which might be contaminated by various undesired components, will not remain within the needle at the washing step of the pipetting device. This of course is very important for not contaminating a next sample, when the same first pipetting device is used again for collecting the first sample in advance at the next e.g. plasma tube. The effective sample shall be collected by a second device as e.g. a pipetting device, the volume of the effective sample being far lower than the volume of the first sample in advance. This effective sample can now be used for analytical purpose for the determination of the respective electrolytes and proteins, etc. such as Na, K, LDH, ALP, Ca and total proteins. The analytical process as such is well-known in the art and shall not be described at this stage.

Further realization of the process shall be defined in dependent claims.

Furthermore a device for probe pipetting of clinic chemical analytes from e.g. lithium-heparin plasma tubes according the wording of claim 7 is proposed.

Unlike to the known devices from the art the inventively proposed device comprises at least one sample-collecting device being designed for the collection of at least two different kinds of samples, such as a first pre-sample in advance and a second effective analytical sample, or at least two sample collecting devices, one sample collecting device being used for collecting a first presample in advance, and a second sampling device for collecting the effective analytical sample to be analytically determined in a following process step.

Furthermore it is proposed, that the device comprises a washing installation for washing the sample collecting device or first sample-collecting device respectively after having disposed the first presample in advance in e.g. a waste container.

Further preferred embodiments of the inventive device are disclosed in dependent claims.

The invention shall be described for example with reference to the attached figures, in which possible examples of the process and the device are shown.

In the figures
- fig. 1: shows a possible layout of a form in which the kind of sampling procedure is defined,
- fig. 2a: shows a possible layout of a form defining the various sampling steps
- fig. 2b: shows a schematic flow chart of the sampling steps, and
- fig. 3: shows schematically the realization of the inventive process.

The example shall be described based upon the COBAS INTEGRA 800 diagnostic device of Hoffmann-La Roche, which is a sample cassetting system for liquid chemical samples to be analysed using Li-heparin plasma tubes. Of course this device is only an example and the following description could be also brought into a relation to other devices known in the art e.g. from Hitachi (as manufacturer for a Clinical Chemistry analyser) or Becton-Dickinson (as manufacturer for blood collecting devices), etc.

From the inserted plasma tubes into the mentioned cassetting device before the first regular sample pipetting step only once a defined first sample in advance such as e.g. 100µl shall be collected with a needle tip depth of e.g. approximately 1 to 1.5mm measured from the sample surface. Of course the sample volume to be precollected is dependent upon the total volume within the plasma tube. After collection of the first presample the pipetting device shall be removed from the plasma tube and arranged at a washing device as e.g. a washing tower. As before executing the prepetting process a certain amount of wash water has been included into the pipetting needle, so that the precollected sample can be disposed into a waste container and at the same process step the inside of the pipetting needle is washed with the washing water, which is arranged above the precollected sample. Furthermore the needle is washed within the washing tower to be ready for a further precollecting step at the next plasma tube.

With a second pipetting needle the real effective sample shall be collected at the plasma tube, the sample volume is usually much smaller than the volume of the precollected sample. Sample volumes for analytical biochemical purposes e.g. of blood plasma samples is in the range between 2 and 10µl, typically 2 to 5µl. Due to the fact, that most of the possible waste components such as silicon oils, etc. as described above in relation to the disadvantages to the existing processes are removed it can be expected, that within the effective sample practically no waste components are present anymore, which could effect the analytical result. In other words it can be expected, that so called duplicate errors will not occur anymore by using the inventive proposed two-step pipetting process as described above.

After collection of the real analytical sample it shall be injected e.g. into a respective analytical arrangement for executing the analysis process, which is known in the art and shall not be described in details at this stage.

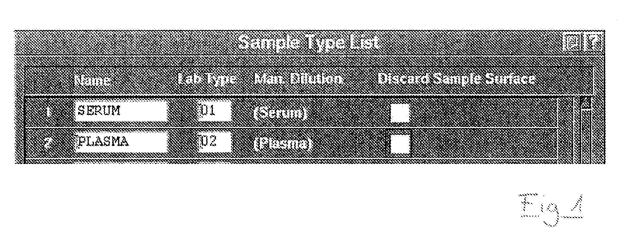

Of course dependent of the kind of tube, the tube volume and the type of analysis to the executed, the volume of the precollected first sample in advance, the depths of the needle tip may vary as well as the volume of the effective sample, being collected in the second step. Furthermore it might well be that dependent upon the sample to be analysed the mentioned proposed first precollecting step might be redundant, which means that immediately the effective sampling collection may take place. In that respect in a first formula the kind of sampling has to be defined, which can be listed in a form, as shown as an example in fig. 1. Sample 1, which might be a serum does not necessarily need the execution of the presampling process step, so that immediately the collection of the effective sample can take place. Item 2 refers to a plasma sample, which means in item 2 the second presampling step is necessary. This can be defined e.g. with using so called bar codes or RF-ID tags, which can be arranged at each tube or at a rack, including e.g. 5 tubes.

Accordingly it is guaranteed, that at different operation methods the respective function or process - 1 or 2 step sampling - shall be applied.

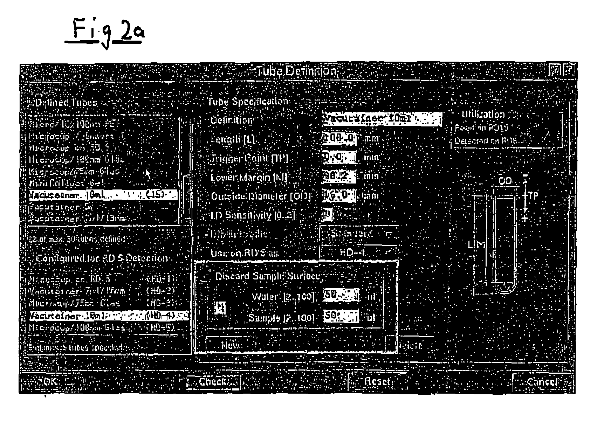

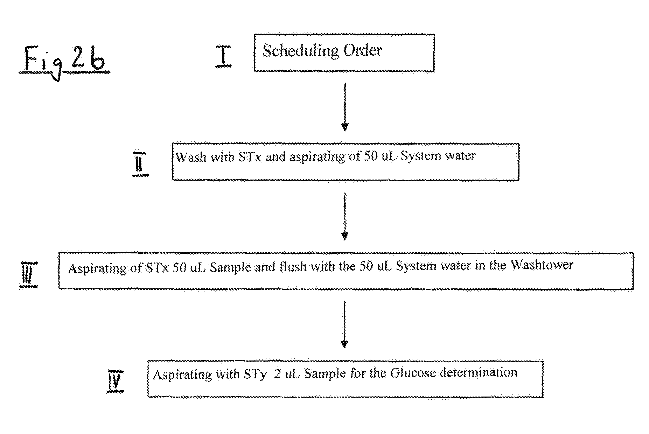

Using a form as e.g. shown in fig. 2a it can be decided, which steps and which procedures shall be executed in case that an inventive two-step sampling collecting process is applied. It is e.g. defined what type of plasma tube such as e.g. a vacutainer is used, the various dimensions of the tube, the depths of the pipetting needle, the volume of the wash water being first inserted into the pipetting needle and the volume of the precollected sample in advance, etc. etc. In the scheme as shown in fig. 2b the steps being listed in the form according fig. 2 are shown schematically. The first item is defining the two-step sampling process, the second item indicates washing the first pipetting needle (STx) and including e.g. 50µl of washing water.

In item 3 e.g. 50µl of sample shall be collected from the plasma tube and shall be deposited together in a waste container near the washing tower.

According to item 4 the effective sample shall be collected using a second pipetting needle (STy) by collecting e.g. a 2µl sample for the glucose determination.

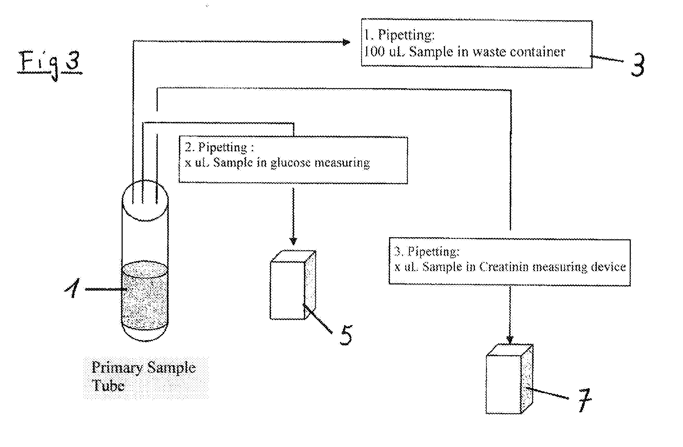

In figure 3 finally schematically again the inventive process is shown where from a blood sample tube 1 using a first pipetting device a first presample in advance shall be collected and deposited at a waste container 3. Afterwards with a second pipetting device the effective sample is collected from the blood plasma tube 1 to be given into a e.g. glucose measuring device 5.

Of course after this effective sampling process further effective samples may be collected e.g. for being deposited in a Creatinine measuring device 7. Further collections may be executed.

Figures 1 to 3 as well as the respective description are only showing and mentioning examples for further explaining the present invention. The invention of course is not at all limited to the figures and the respective descriptions and the invention is of course not at all limited to the mentioned Roche device which was the basis for the descriptions of the drawings. Instead of the described two sampling devices it is of course also possible to arrange only one sampling device instead, the sampling device being designed such that either the collection of the presample in advance can be executed as well as the collection of the real sample for analytical purpose. Furthermore different kinds of tubes or containers may be used to provide e.g. blood samples for analytical purpose. In addition the depths of the needle for the first sample collection is not at all limited to the given examples but is generally spoken dependent upon the non-wanted elements or components, which could interfere the analysis of the sample. In other words the depths of the needle for collecting the first sample in advance has to be determined before starting a analytical sampling series. The first sample collection could happen e.g. more or less directly from the surface layer, could be done just beneath the surface layer or could be executed at a distance from the surface layer dependent upon the range or area, in which the non-desired and interfering components and elements are present within the sample to be analysed.

In addition the present invention is not limited to analytical sample as described in respect to the drawings and the examples but can be used for any kind of liquid samples to be collected for analytical purpose.

The main idea of the present invention is to have a precollecting step to remove a first sample in advance to enhance the possibility, that at the real effective sample removal no disturbing components are present in the effective sample so that duplicate errors can be reduced or even can be eliminated.

### Lit:

[1] Clinical Chemistry 50, No. 12, 2004, p. 2391-92

## Claims

1. Process for the collection of liquid samples for analytical purpose, **characterized in that** at least one first sample is collected from the surface layer, just underneath or at a distance from the surface layer of the liquid sample or analyte respectively, which is removed and afterwards a second sample is collected for being analyzed.

2. Process according to claim 1, **characterized in that** the first sample is a sample in advance to be disposed and that the second sample is the real sample to be used for analytical purpose.

3. Process according to one of the claims 1 or 2, **characterized in that** the at least one first sample in advance is removed by a pipetting device, whereas the needle tip is arranged near the surface layer, just beneath or at a distance from the surface layer of the liquid sample or analyte respectively that after removal of the first sample the needle tip is in the area of the surface layer or still underneath the layer.

4. Process according to one of the claims 1 to 3, **characterized in that** for the removal of the at least one first sample in advance a first pipetting device is used and for the removal of the second sample or the real sample to be analyzed a second pipetting device is used which is separate from the first pipetting device.

5. Process according to one of the claim 3 or 4, **characterized in that** before the removal of the at least one first sample in advance a certain volume of a washing liquid such as washing water is inserted into the pipetting needle and afterwards the first sample in advance is removed, the pipetting device after removal of the first sample in advance is moved to a washing device, where the first sample in advance together with the washing liquid is disposed, whereupon the pipetting device is washed to be used for a further removal of a liquid sample.

6. Process according to one of the claims 1 to 5, **characterized in that** the liquid sample or analyte respectively is provided within a tube-like container or receptacle and the first sample in advance is collected from or underneath the sample surface layer, the volume removed in the first step is a predetermined volume which is larger than the volume to be removed in a second step as real analytical sample to be used for analytical purpose.

7. Process according to one of the claims 1 to 6, **characterized in that** it is a collection process of liquid analytical samples of clinical chemical analytes.

8. Analytical device for the analysis of clinic chemical analytes, **characterized in that** at least one sample-collecting device is provided designed such that the collection of at least two different kinds of samples is possible as the collection of a first sample in advance and the collection of the real analytical sample to be used for analytical reason, or at least two sample-collecting devices are provided, one collecting device for the collection of a first sample in advance and one device for the collection of the real analytical sample to be used for analytical reasons.

9. Device according to claim 8, **characterized in that** the one sample-collecting device or the at least two sampling devices are comprising pipetting needles, the analytical device further comprising a washing tower for feeding the pipetting needle of the one sample-collecting device or the first collecting device with a certain amount of washing water and for washing the one or the first collecting device after removal and disposal of the first sample in advance to make it ready for further sampling steps.

10. Device according to one of the claims 8 or 9, **characterized in that** for providing the liquid analytes tube-like containers or racks comprising tube-like containers are arranged to be inserted into the device for the execution of the at least two sampling steps as described in a process claim according to one of the claims 1 - 7.

11. Use of the process according to one of the claims 1 - 7 for the analysis of blood plasma samples.
